# EUROPEAN PATENT APPLICATION

(11) **EP 4 049 986 A1**
(43) Date of publication of application: **31.08.2022**
(21) Application number: 20894686.3
(22) Date of filing: 24.11.2020
(51) Int. Cl.: C04B 22/08, C04B 22/14, C04B 28/04

(54) **POWDERED QUICK-SETTING AGENT**

(30) Priority: 26.11.2019 JP 2019213236
(71) Applicant: Denka Company Limited, Tokyo 103-8338 (JP)
(72) Inventor: MUROKAWA, Takamitsu, Tokyo 103-8338 (JP); SAKAKIBARA, Takanori, Tokyo 103-8338 (JP)
(74) Representative: Ter Meer Steinmeister & Partner
(86) International application number: PCT/JP2020/043678
(87) International publication number: WO 2021/106876

(57) **Abstract**

A powdered quick-setting agent containing a calcium aluminate compound and containing no sodium aluminate, wherein the calcium aluminate compound has a SiO₂ content of 7% by mass or less, and the calcium aluminate compound has a ratio (I_{ALO6}/I_{AlO4}) of an intensity I_{AlO4} of an absorption peak based on AlO₄ group stretching vibration and an intensity I_{AlO6} of an absorption peak based on AlO₆ group stretching vibration by FT-IR of 0.53 to 0.75.

## Description

### Technical Field

The present invention relates to a powdered quick-setting agent, specifically to a powdered quick-setting agent containing no sodium aluminate.

### Background Art

Conventionally, as quick-setting agents for setting a cement quickly, those containing calcium aluminate as a major component and containing sodium aluminate, etc. have been known since before (for example, see Patent Literature 1).

It has been considered that sodium aluminate helps reactions of calcium aluminate, and sodium aluminate itself is gelled to provide very initial stiffness, and thus is an indispensable component for cement quick-setting agents.

### Patent Literature

PTL 1: JP 5-39899 A

### Summary of Invention

### Technical Problem

However, in some cases, sufficient care is necessitated in handling sodium aluminate, and in some cases, it is better to refrain from using sodium aluminate from the viewpoint of environmental sanitation. On the other hand, if sodium aluminate is not used in quick-setting agents containing calcium aluminate as a major component, the quick-setting performance is deteriorated.

Accordingly, the object of the present invention is to provide a powdered quick-setting agent that shows a fine quick-setting performance that is equivalent to or more than that of a quick-setting agent containing sodium aluminate and containing calcium aluminate as a major component.

The present inventors did intensive studies so as to solve the above-mentioned problem, and consequently found that, when a SiO₂ content in a calcium aluminate compound for use in a quick-setting agent is set to 7% by mass or less, and an intensity ratio of an absorption peak based on AlO₆ group stretching vibration and an absorption peak based on AlO₄ group stretching vibration observed by FT-IR is set to be within a predetermined range, a fine quick-setting performance that is equivalent to or more than that of a quick-setting agent containing sodium aluminate and containing calcium aluminate as a major component can be obtained, and completed the present invention. That is, the present invention is as shown below.

### Solution to Problem

[1] A powdered quick-setting agent containing a calcium aluminate compound and containing no sodium aluminate,
   wherein the calcium aluminate compound has a SiO₂ content of 7% by mass or less, and the calcium aluminate compound has a ratio (I_{ALO6}/I_{AlO4}) of an intensity I_{AlO4} of an absorption peak based on AlO₄ group stretching vibration and an intensity I_{AlO6} of an absorption peak based on AlO₆ group stretching vibration by FT-IR of 0.53 to 0.75.
[2] The powdered quick-setting agent according to [1], which contains the calcium aluminate compound by 60% by mass or more.
[3] The powdered quick-setting agent according to [1] or [2], which further contains at least one kind selected from the group consisting of an alkali metal sulfate and an alkaline earth metal sulfate.
[4] The powdered quick-setting agent according to [3], which contains the alkali metal sulfate, and said alkali metal sulfate is sodium sulfate.
[5] The powdered quick-setting agent according to [3], which contains the alkaline earth metal sulfate, and said alkaline earth metal sulfate is calcium sulfate.
[6] The powdered quick-setting agent according to [4], which contains the sodium sulfate by 1 to 40 parts by mass with respect to 100 parts by mass of the calcium aluminate compound.
[7] The powdered quick-setting agent according to [5], which contains the calcium sulfate by 2 to 45 parts by mass with respect to 100 parts by mass of the calcium aluminate compound.
[8] A cement composition including the powdered quick-setting agent according to any of [1] to [7] and a cement.

Here, the powdered quick-setting agent in the present invention is defined as an agent that is in a powder state in at least a temperature range in use, and that can improve quick-setting performances (performances such as increase in condensation velocity and provision of loss of fluidity) in cement compositions such as cement pastes, cement mortars and cement concretes.

### Advantageous Effects of Invention

According to the present invention, a powdered quick-setting agent that shows a fine quick-setting performance that is equivalent to or more than that of a quick-setting agent containing sodium aluminate and containing calcium aluminate as a major component can be provided.

### Description of Embodiments

Hereinafter the exemplary embodiment of the present invention (this exemplary embodiment) will be explained in detail. Note that the part and % used in the present invention are based on mass unless otherwise stated.

The powdered quick-setting agent of this exemplary embodiment is a powdered quick-setting agent containing a calcium aluminate compound and containing no sodium aluminate. Since the powdered quick-setting agent contains no sodium aluminate, the botheration in handling which may be caused when this is used can be solved.

The calcium aluminate compound in this exemplary embodiment has a SiO₂ content of 7% by mass or less, preferably 6.5% by mass or less, more preferably 6% by mass or less. If the SiO₂ content goes beyond 7% by mass, the strength expression property from the very initial stage decreases as the quick-setting agent. The SiO₂ content can be measured, for example, by a total amount of a content ratio of pure silicon dioxide and soluble silicon dioxide according to "Method for Chemical Analysis of Cements" of JIS R5202.

Furthermore, the calcium aluminate compound has a ratio (I_{ALO6}/I_{AlO4}) of an intensity I_{AlO6} of an absorption peak based on AlO₆ group stretching vibration and an intensity I_{AlO4} of an absorption peak based on AlO₄ group stretching vibration by FT-IR of 0.53 to 0.75, preferably 0.60 to 0.75, more preferably 0.64 to 0.75.

The absorption peak based on AlO₆ group stretching vibration is a peak that attributes to an AlO₆ octahedron, and the absorption peak based on AlO₄ group stretching vibration is a peak that attributes to an AlO₄ tetrahedron. Furthermore, if I_{AlO6}/I_{AlO4}, which is the intensity ratio of these, is lower than 0.53, the very early strength decreases, the adhesiveness and strength expression property decrease, and the long-term strength tends to decrease. Furthermore, if I_{AlO6}/I_{AlO4} goes beyond 0.75, the very early strength decreases. The FT-IR of the calcium aluminate compound can be measured by the method described in Examples.

It is noted that the absorption peak based on AlO₄ group stretching vibration is observed, for example, at a wavelength of approximately 690 to 770 cm⁻¹, and the absorption peak based on AlO₆ group stretching vibration is observed, for example, at a wavelength of approximately 550 to 610 cm⁻¹. For identifying (confirming) these, for example, solid NMR, etc. may also be used.

Here, calcium aluminate compound (hereinafter also referred to as CA compound) is a collective term for compounds including CaO and Al₂O₃ as major components and has hydration activity and has fine quick-setting property, and amorphous calcium aluminate compounds are preferable.

It is noted that "major component" in the present specification means that a ratio that accounts for the entirety goes beyond 50% by mass.

The amorphous calcium aluminate compound can be obtained by mixing a raw material containing calcia, a raw material containing alumina, etc., heat-melting the mixture, and quenching this; however, considering that the above-mentioned intensity ratio (I_{ALO6}/I_{AlO4}) is set to be within a predetermined range, it is preferable to apply the production method as mentioned below.

The molar ratio of CaO to Al₂O₃ (CaO/Al₂O₃) of the amorphous calcium aluminate compound is not specifically limited; however, from the viewpoints of hydration activity, strength expression property, etc., the molar ratio is preferably 1.6 to 2.3, more preferably 1.75 to 2.2.

The percentage of glass content of the amorphous calcium aluminate compound is not specifically limited; however, from the viewpoints of fine quick-setting performance, initial strength expression property, etc., the percentage of glass content is preferably 60% or more, more preferably 90% or more.

The crystalline part of the amorphous calcium aluminate compound is not specifically limited, and examples include calcium aluminates such as 3CaO·Al₂O₃ and 12CaO·7Al₂O₃, and gehlenite, calcium aluminoferrite, calcium ferrite, etc. due to sub-components or unavoidable impurities derived from raw materials.

The percentage of glass content of the amorphous calcium aluminate compound can be obtained by powder X-ray diffraction/Rietveld analysis. Specifically, an internal standard substance such as aluminum oxide or magnesium oxide is added by a predetermined amount to a measurement sample, sufficiently mixed in a agate mortar, etc., and measured by powder X-ray diffraction. Thereafter the measurement result is analyzed by quantification software to obtain the generated amounts of minerals, and the residual part is deemed as a percentage of glass content. As the quantification software, "SIROQUANT" manufactured by Sietronics, etc. can be used.

The fineness of the amorphous calcium aluminate compound is not specifically limited; however, it is preferably 4,000 to 8,000 cm²/g, more preferably 5,000 to 6,000 cm²/g by a Blaine specific surface area (JIS R 5201 basis). By that the Blaine specific surface area is 4,000 to 8000 cm²/g, the quick-setting performance, initial strength expression property, etc. are likely to be fine. Furthermore, it is preferable from the viewpoint of workability.

The content of the calcium aluminate compound in the powdered quick-setting agent of this exemplary embodiment is preferably 60% or more, more preferably 65% or more in the powdered quick-setting agent. If the content is 60% or more, a fine condensation characteristic and a long-term strength expression property are obtained easily.

It is preferable that the powdered quick-setting agent of this exemplary embodiment contains at least one kind selected from the group consisting of an alkali metal sulfate and an alkaline earth metal sulfate from the viewpoint of improvement of the strength expression property of a concrete after blowing. These may be added to the above-mentioned calcium aluminate compound.

### (Alkali metal sulfate)

As the alkali metal sulfate, sulfates of lithium, sodium and potassium are exemplified, and among these, sulfates of lithium and sodium (lithium sulfate, sodium sulfate) are preferable as strength increasing effects. Furthermore, among these, sodium sulfate is preferable, and an anhydride of sodium sulfate is especially preferable since it has a role of a desiccant for absorbing the moisture in the air and thus contributes to the stability during storage.

The Blaine specific surface area of the alkali metal sulfate is preferably 100 to 1,000 cm²/g, more preferably 300 to 800 cm²/g. By being 100 to 1,000 cm²/g, a strength expression property up to 24 hours is obtained easily, and the handling properties of mortars and/or concretes during blowing can be made fine.

The alkali metal sulfate (sodium sulfate, etc.) is contained by preferably 1 to 40 parts by mass, more preferably 1 to 35 parts by mass with respect to 100 parts by mass of the calcium aluminate compound of the powdered quick-setting agent. By containing by 1 to 40 parts by mass, the effect of increasing a compression strength up to after 24 hours is imparted more easily.

### (Alkaline earth metal sulfate)

As the alkaline earth metal sulfate, calcium sulfates are preferable, and examples include anhydrous gypsum (anhydrous calcium sulfate), semi-hydrate gypsum (calcium sulfate hemihydrate), and gypsum dihydrate (calcium sulfate dihydrate), etc. Among these, anhydrous gypsum is preferable.

The Blaine specific surface area of the alkaline earth metal sulfate is preferably 3,500 cm²/g or more, more preferably 4,000 cm²/g or more from the viewpoints of a fine quick-setting performance and a fine initial strength expression property.

The alkaline earth metal sulfate (calcium sulfate, etc.) is contained by preferably 2 to 45 parts by mass, more preferably 3 to 40 parts by mass with respect to 100 parts by mass of the calcium aluminate compound of the powdered quick-setting agent. By containing by 2 to 45 parts by mass, a long-term intensity is obtained easily while a fine quick-setting property is exerted.

The powdered quick-setting agent of this exemplary embodiment can contain components other than those mentioned above in a scope in which the effect of the present invention is not substantially lost. As such component, aluminum sulfate, calcium carbonate, calcium hydroxide, aluminum hydroxide can be exemplified, but are not limited to these.

For the calcium aluminate compound of this exemplary embodiment, raw materials are prepared so as to give a SiO₂ content of 7% by mass or less, the prepared raw materials are put into an electric arc furnace (for example, heating chamber volume: 150 liter), and melted by heating the inside of the electric furnace to 1,500 to 2,000°C and retaining for 1 to 2 hours. Thereafter, the melt product is removed from the inside of the furnace, and quenched to 700 to 1,000°C at 1,100 to 7,000 K/sec by means of a cooling equipment by using compressed air containing water. Thereafter the product is allowed to cool without feeding compressed air containing water, and allowed to cool under an ordinary atmosphere to give the calcium aluminate compound of this exemplary embodiment.

The powdered quick-setting agent of this exemplary embodiment as mentioned above shows a fine quick-setting performance that is equivalent to or more than that of a quick-setting agent containing sodium aluminate and containing calcium aluminate as a major component. Therefore, by using said powdered quick-setting agent, a cement composition having a fine initial condensation property, a fine initial strength expression property and a fine workability can be prepared. That is, the cement composition of this exemplary embodiment contains the powdered quick-setting agent of the present invention mentioned above and a cement.

The powdered quick-setting agent of the present invention in said cement composition is incorporated by preferably 5 to 30 parts by mass, more preferably 10 to 20 parts by mass with respect to 100 parts by mass of the cement.

Furthermore, other admixture materials and aggregates that can be used in mortars and concretes can be used in combination with the cement according to the purpose of use.

Examples of the cement used herein may include Portland cements such as ordinary Portland cement, early-strength Portland cement, moderate-heat Portland cement and ultra high-early-strength Portland cement, and various mixed cements obtained by incorporating components such as fly ash and blast furnace slag in those Portland cements. Among these, ordinary Portland cement and early-strength Portland cement are more preferable.

Furthermore, as the aggregate, both fine aggregates and coarse aggregates can be used. The fine aggregates include river sand, mountain sand, lime sand, silica sand, etc., and the coarse aggregates include river ballast, mountain ballast, lime ballast, etc.

### Examples

Hereinafter the contents will further be explained in detail with referring to Examples and Comparative Examples, but the present invention is not limited to these.

### [Example 1]

Lime stone (CaO content ratio: 95.36% by mass, Al₂O₃ content ratio: 0.01% by mass, MgO content ratio: 0.81% by mass, SiO₂ content ratio: 1.53% by mass) as a calcia source and bauxite (CaO content ratio: 3.5% by mass, Al₂O₃ content ratio: 84.31% by mass, MgO content ratio: 1.24% by mass, SiO₂ content ratio: 6.3% by mass) as an alumina source were used as materials. These were put into an electric arc furnace, retained at 1,650°C for 2 hours and melted. Thereafter the melt product was removed from the inside of the furnace, and quenched up to 1,000°C by a cooling equipment capable of feeding compressed air containing water. The cooling velocity was set to be 5,000 K/sec, the water in the compressed air was set to be 0.1 vol%, and the pressure of the compressed air was set to be 0.4 MPa. Thereafter the melt product was allowed to cool in a state that the feeding of the compressed air containing water was stopped (under an atmospheric atmosphere) to produce a calcium aluminate compound, and this was used as a powdered quick-setting agent.

The CaO/Al₂O₃molar ratio was adjusted to be 2.0, the percentage of glass content was adjusted to be 99%, and the Blaine specific surface area was adjusted to be 5,800 cm²/g.

For the obtained powdered quick-setting agent, an FT-IR measurement was carried out using a Frontier manufactured by Perkin Elmer. In the measurement, a background measurement was carried out by using a single reflection ATR, a sample including a powdered quick-setting agent was then set, and the sample surface was measured at a scanning frequency of 16. The measurement result was output by setting the longitudinal axis (Y axis) as the absorbance and the horizontal axis as the wave number, and an intensity I_{AlO6} of an absorption peak based on AlO₆ group stretching vibration, and an intensity I_{AlO4} of an absorption peak based on AlO₄ group stretching vibration were calculated by analysis software (Spectrum manufactured by Perkin Elmer), and an intensity ratio of these (I_{ALO6}/I_{AlO4}) was obtained. The result is shown in Table 1.

Furthermore, 100 parts by mass of an ordinary Portland cement (Blaine specific surface area: 3,200 cm²/g, specific gravity: 3.15), 10 parts by mass of the powdered quick-setting agent, 300 parts by mass of a fine aggregate (JIS standard sand, commercially available product), and 60 parts by mass of water were kneaded to prepare a cement composition. Using said cement composition, the following evaluations of the condensation time and the compression strength were carried out. These results are shown in Table 1.

### (Evaluations)

Condensation time: According to ASTMC403, the cement composition was rapidly put into a formwork, a proctor penetration resistance value was measured, and the initial set and termination of a condensation time were measured.

Compression strength: According to JIS R5201, a test body of the cement composition of 4 × 4 × 16 cm was prepared, and mold-released after 3 hours, and a compression strength was measured.

### [Example 2]

A calcium aluminate compound was produced in a similar manner to that of Example 1 except that the cooling velocity was set to be 3,000 K/sec, and this was used as a powdered quick-setting agent. For said powdered quick-setting agent, an FT-IR measurement was carried out in a similar manner to that of Example 1. The result is shown in Table 1.

Furthermore, a cement composition was prepared in a similar manner to that of Example 1, and the condensation time and the compression strength were evaluated by using said cement composition. These results are shown in Table 1.

### [Example 3]

A calcium aluminate compound was produced in a similar manner to that of Example 1 except that the cooling velocity was set to be 7,000 K/sec, and this was used as a powdered quick-setting agent. For said powdered quick-setting agent, an FT-IR measurement was carried out in a similar manner to that of Example 1. The result is shown in Table 1.

Furthermore, a cement composition was prepared in a similar manner to that of Example 1, and the condensation time and the compression strength were evaluated by using said cement composition. These results are shown in Table 1.

### [Comparative Example 1]

A calcium aluminate compound was produced in a similar manner to that of Example 1 except that an SiO₂ reagent (99%) was incorporated in the material as a SiO₂ source so that the SiO₂ content in the CA compound was set to be 8%, and this was used as a powdered quick-setting agent. For said powdered quick-setting agent, an FTIR measurement was carried out in a similar manner to that of Example 1. The result is shown in Table 1. Furthermore, a cement composition was prepared in a similar manner to that of Example 1, and the condensation time and the compression strength were evaluated by using said cement composition. These results are shown in Table 1.

### [Comparative Example 2]

A calcium aluminate compound was produced in a similar manner to that of Example 1 except that the cooling velocity was set to be 1,000 K/sec, and this was used as a powdered quick-setting agent. For said powdered quick-setting agent, an FT-IR measurement was carried out in a similar manner to that of Example 1. The result is shown in Table 1.

Furthermore, a cement composition was prepared in a similar manner to that of Example 1, and the condensation time and the compression strength were evaluated by using said cement composition. These results are shown in Table 1.

### [Comparative Example 3]

A calcium aluminate compound was produced in a similar manner to that of Example 1 except that the cooling velocity was set to be 10,000 K/sec, and this was used as a powdered quick-setting agent. For said powdered quick-setting agent, an FT-IR measurement was carried out in a similar manner to that of Example 1.The result is shown in Table 1.

Furthermore, a cement composition was prepared in a similar manner to that of Example 1, and the condensation time and the compression strength were evaluated by using said cement composition. These results are shown in Table 1.

### [Table 1]

**Table 1**

| | CA compound | | Condensation time (sec) | | Compression strength (N/mm²) |
|---|---|---|---|---|---|
| | SiO₂ content (%) | I_{AlO6}/I_{AlO4} | Initial set | Termination | |
| Example 1 | 6 | 0.64 | 45 | 420 | 1.83 |
| Example 2 | 6 | 0.55 | 90 | 600 | 1.51 |
| Example 3 | 6 | 0.70 | 30 | 240 | 1.92 |
| Comparative Example 1 | 8.1 | 0.61 | 120 | 1800 | 0.74 |
| Comparative Example 2 | 6 | 0.45 | 120 | 900 | 1.13 |
| Comparative Example 3 | 6 | 0.85 | 120 | 300 | 1.74 |

### [Examples 4 to 14]

One hundred parts by mass of an ordinary Portland cement (Blaine specific surface area: 3,200 cm²/g, specific gravity: 3.15), 10 parts by mass of the powdered quick-setting agent shown in Table 2, 300 parts by mass of a fine aggregate (JIS standard sand, a commercially available product), and 60 parts by mass of water were kneaded to prepare a cement composition. Using said cement composition, the evaluations of the following condensation time and compression strength were carried out. These results are shown in Table 2. Incidentally, Example 1 was used as the calcium aluminate compound incorporated in said powdered quick-setting agent, and the alkali metal sulfate and alkaline earth metal sulfates shown below are shown in Table 2 as parts when the calcium aluminate compound is set as 100 parts. Furthermore, the compression strength was measured after 3 hours and after 1 day, respectively.

- Alkali metal sulfate: sodium sulfate, an anhydrous product, a neutral product, a reagent, Blaine 500 cm²/g
- Alkaline earth metal sulfate: calcium sulfate, an anhydrous product, a reagent, Blaine 5,000 cm²/g

### [Table 2]

**Table 2**

| | Alkali metal sulfate | Alkaline earth metal sulfate | Condensation time(sec) | | Compression strength (N/mm²) | |
|---|---|---|---|---|---|---|
| | | | Initial set | Termination | 3 hours | 1 day |
| Example 1 | 0 | 0 | 45 | 420 | 1.83 | 7.5 |
| Example 4 | 2 | 0 | 45 | 410 | 1.81 | 9.6 |
| Example 5 | 3 | 0 | 45 | 420 | 1.75 | 9.8 |
| Example 6 | 20 | 0 | 60 | 450 | 1.58 | 10.1 |
| Example 7 | 30 | 0 | 90 | 520 | 1.45 | 10 |
| Example 8 | 35 | 0 | 100 | 630 | 0.81 | 10 |
| Example 9 | 0 | 4 | 45 | 400 | 1.76 | 8.2 |
| Example 10 | 0 | 5 | 45 | 400 | 1.62 | 8.5 |
| Example 11 | 0 | 15 | 60 | 450 | 1.41 | 9.3 |
| Example 12 | 0 | 35 | 86 | 540 | 1.35 | 9.7 |
| Example 13 | 0 | 40 | 110 | 650 | 0.92 | 9.5 |
| Example 14 | 30 | 35 | 100 | 550 | 1.31 | 11.1 |

### Industrial Applicability

The powdered quick-setting agent of the present invention can be preferably used, for example, in the fields of civil engineering and architecture.

## Claims

1. A powdered quick-setting agent containing a calcium aluminate compound and containing no sodium aluminate,
wherein the calcium aluminate compound has a SiO₂ content of 7% by mass or less, and the calcium aluminate compound has a ratio (I_{ALO6}/I_{AlO4}) of an intensity I_{AlO4} of an absorption peak based on AlO₄ group stretching vibration and an intensity I_{AlO6} of an absorption peak based on AlO₆ group stretching vibration by FT-IR of 0.53 to 0.75.

2. The powdered quick-setting agent according to claim 1, which contains the calcium aluminate compound by 60% by mass or more.

3. The powdered quick-setting agent according to claim 1 or 2, which further contains at least one kind selected from the group consisting of an alkali metal sulfate and an alkaline earth metal sulfate.

4. The powdered quick-setting agent according to claim 3, which contains the alkali metal sulfate, and said alkali metal sulfate is sodium sulfate.

5. The powdered quick-setting agent according to claim 3, which contains the alkaline earth metal sulfate, and said alkaline earth metal sulfate is calcium sulfate.

6. The powdered quick-setting agent according to claim 4, which contains the sodium sulfate by 1 to 40 parts by mass with respect to 100 parts by mass of the calcium aluminate compound.

7. The powdered quick-setting agent according to claim 5, which contains the calcium sulfate by 2 to 45 parts by mass with respect to 100 parts by mass of the calcium aluminate compound.

8. A cement composition comprising the powdered quick-setting agent according to any one of claims 1 to 7 and a cement.
